# EUROPÄISCHE PATENTSCHRIFT

(11) **EP 1 838 757 B1**
(45) Veröffentlichungstag und Bekanntmachung des Hinweises auf die Patenterteilung: **25.03.2009**
(21) Anmeldenummer: 06704360.4
(22) Anmeldetag: 19.01.2006
(51) Int. Cl.: C09K 8/80, C08G 77/06

(54) **HYDROLYTISCH UND HYDROTHERMAL BESTÄNDIGE KONSOLIDIERTE PROPPANTS UND VERFAHREN ZU DEREN HERSTELLUNG**
HYDROLYTICALLY AND HYDROTHERMALLY STABLE CONSOLIDATED PROPPANTS AND METHOD FOR THE PRODUCTION THEREOF
AGENTS DE SOUTENEMENT CONSOLIDES A RESISTANCE HYDROLYTIQUE ET HYDROTHERMIQUE ET PROCEDE DE REALISATION ASSOCIE

(30) Priorität: 20.01.2005 DE 102005002806
(43) Veröffentlichungstag der Anmeldung: 03.10.2007
(73) Patentinhaber: Kraiburg Geotech GmbH, 66121 Saarbrücken (DE)
(72) Erfinder: SCHMIDT, Helmut, 66130 Saarbrücken-güdingen (DE); REINHARD, Bernd, 66663 Merzig-brotdorf (DE); ENDRES, Klaus, 66424 Homburg (DE); ADAM, Jens, 66130 Saarbrücken (DE)
(74) Vertreter: Barz, Peter
(86) Internationale Anmeldenummer: PCT/EP2006/000463
(87) Internationale Veröffentlichungsnummer: WO 2006/077123

(56) Entgegenhaltungen:
- EP-A- 0 075 962
- WO-A-93/04140
- WO-A-20/05073278
- US-A- 4 417 623
- US-A1- 2001 024 719
- US-A1- 2004 200 617

## Beschreibung

Die Erfindung betrifft ein Verfahren zur Herstellung von hydrothermal konsolidierten und hydrolytisch beständigen, konsolidierten Proppants.

Bindemittel sind insbesondere für das Binden von kompakten oder körnigen Produkten von hoher Bedeutung. In der Erdölindustrie hat sich besonders das Verfahren des Fracturing zur Steigerung und Stabilisierung der Ölförderleistung in ölhaltigen Lagerstätten erwiesen. Zu diesem Zweck wird zunächst mittels einer hochviskosen Flüssigkeit (Fracture fluid) eine künstliche Spalte in der ölführenden Formation um das Bohrloch herum erzeugt. Damit diese Spalte offen bleibt, wird das hochviskose Fluid mit sogenannten Proppants versehen, die nach dem Wegnehmen des Druckes, der zur Erzeugung und Aufrechterhaltung des Formationsspaltes notwendig ist, die Spalte als eine Region mit erhöhter Porosität und Permeabilität aufrechterhalten. Im folgenden werden Spalten oder Risse auch als "Fracture" bezeichnet. Proppants sind insbesondere Sande und keramische Partikel mit mehreren 100 µm bis einigen Millimetern Durchmesser, die in dem Gebirgsspalt positioniert werden. In der Regel müssen diese Proppants verfestigt werden, um das Auswaschen (flow back) mit dem geförderten Öl zu verhindern. Hierfür sind Bindemittel erforderlich, die unter den Bedingungen des erschlossenen Reservoirs (hoher Druck bei hoher Temperatur, reservoireigenes Grundwasser und aggressive Komponenten in den Rohölen und Gasen) zunächst aushärten und bei der Ölförderung dauerhaft beständig sind.

Für eine effiziente Anwendung von Bindemitteln ist es wichtig, dass die Beständigkeit unter den oben genannten aggressiven Bedingungen möglichst lange aufrechterhalten bleibt, wobei die Bindefestigkeit und die Porosität nicht nennenswert reduziert werden dürfen. Die im Stand der Technik genannten Systeme, die nahezu alle auf organischen Polymeren aufbauen, haben diesbezüglich eine sehr eingeschränkte Lebensdauer.

Die Konsolidierung von Proppants mit geeigneten Bindemitteln ist insbesondere dann schwierig, wenn die konsolidierten Proppants im Vergleich zu den Proppants ohne Bindemittel nicht nennenswert an Porosität einbüßen sollen. So lassen sich z.B. mit organischen Polymerbindemitteln poröse Komposite herstellen, jedoch zeigt sich, dass es kaum möglich ist, die ursprüngliche Porosität aufrecht zu erhalten. Bei reduziertem Bindemitteleinsatz gelingt es zwar, poröse Systeme herzustellen, aufgrund der Eigenschaft der organischen Polymere in Gegenwart von organischen Lösungsmitteln aufzuquellen oder in Lösung zu gehen, sind solche Komposite jedoch für viele Anwendungen, insbesondere bei höheren Temperaturen und in Umgebung organischer Flüssigkeiten, nicht geeignet.

Die Verwendung von rein anorganischen Bindemitteln, die z. B. über den Sol-Gel Prozess zugänglich sind, führt zwar zu einer Bindung, bei der im Proppant eine entsprechende Porosität aufrecht erhalten wird, jedoch ist das gebundene System sehr spröde, brüchig und gegenüber mechanischen Belastungen wie Scherbelastungen oder starken Druckbelastungen nicht ausreichend widerstandsfähig.

Ferner ist es häufig zweckmäßig, Proppants unter den Bedingungen herzustellen, unter denen sie später auch angewandt werden. Daher ist es häufig notwendig, die Proppants vor Ort nach dem Einbringen in den Fracture unter den geologischen Druck- und Temperaturbedingungen zu härten. Dies ist bei vielen Konsolidierungsmitteln nicht oder unter Verlust der notwendigen Hydrolysebeständigkeiten möglich.

WO-A-93/04140 beschreibt ein Mittel zur Verfestigung von Böden, das als gerüstbildende Precursoren Alkoxysilane und/oder Aluminiumalkoholate und gegebenenfalls als gerüstmodifizierenden Precursor 0,1 bis 15 Masse % anderer Stoffe wie z.B. Borsäure umfasst. Das in WO-A-93/04140 beschriebene Verfahren umfasst die Einbringung des Mittels in ein Wasser enthaltendes Material, das zu verfestigen ist, wodurch es zur Verfestigung kommt.

US-A-4417623 betrifft ein Verfahren zum Konsolidieren eines sandartigen Materials in einer Formation angrenzend an ein Bohrloch, bei dem Alkohol und eine organische Silicatlösung in das Bohrloch eingeleitet werden und dann Wasser in das Bohrloch eingeleitet wird.

WO-A-2005/073278, ein Dokument gemäß Art. 54 (3) und (4) EPÜ, beschreibt ein Konsolidierungsmittel und dessen Verwendung zur Konsolidierung von Formkörpern und geologischen Formationen, wobei das Konsolidierungsmittel ein Hydrolysat oder Vorkondensat von mindestens einem Organosilan mit einer hydrolytisch nicht abspaltbaren Gruppe und mindestens einem hydrolysierbaren Silan, das nur hydrolytisch abspaltbare Gruppen oder Hydroxygruppen enthält, umfasst. Das Hydrolysat oder Vorkondensat kann gegebenenfalls in Gegenwart einer Metallverbindung hergestellt werden.

Aufgabe der Erfindung war es, Verfahren zur Herstellung konsolidierter Proppants unter Hydrothermalbedingungen von Reservoiren bereitzustellen, die insbesondere unter diesen Druck- und Temperaturverhältnissen hydrolyse- und korrosionsstabil sind; so dass ihre Funktionalität über mehrere Jahre hinweg erhalten bleibt. Beim Härtungsprozeß unter diesen Hydrothermalbedingungen sollte die Porosität und Permeabilität - verglichen mit den unverfestigten Proppants - zu einem Großteil erhalten bleiben bei gleichzeitig hoher Bindefestigkeit.

Die Aufgabe wurde gelöst durch ein Verfahren zur Herstellung von hydrolytisch und hydrothermal beständigen konsolidierten Proppants, bei dem man
(A) ein Konsolidierungsmittel, umfassend ein Hydrolysat oder Vorkondensat von
   (a) mindestens einem Organosilan der allgemeinen Formel (I)

      RₙSiX₄₋ₙ (I)

      worin die Reste R gleich oder verschieden sind und hydrolytisch nicht abspaltbare Gruppen darstellen, die Reste X gleich oder verschieden sind und hydrolytisch abspaltbare Gruppen oder Hydroxygruppen darstellen und n den Wert 1, 2 oder 3 hat,
   (b) mindestens einem hydrolysierbaren Silan der allgemeinen Formel (II)

      SiX₄ (II)

      worin die Reste X die vorstehende Bedeutung haben; und
   (c) mindestens einer Metallverbindung der allgemeinen Formel (III)

      MXₐ (III)

      worin M ein Metall der Hauptgruppen III bis V oder der Nebengruppen II bis VIII des Periodensystems der Elemente einschließlich Bor ist, X wie in Formel (I) definiert ist, wobei zwei Gruppen X durch eine Oxogruppe ersetzt sein können, und a der Wertigkeit des Elements entspricht;
   wobei das molare Verhältnis von eingesetzten Siliciumverbindungen zu eingesetzten Metallverbindungen im Bereich von 10.000:1 bis 10:1 liegt, mit einem Proppant vermengt und
(B) das Konsolidierungsmittel bei einem Druck größer als 1 bar und einer Temperatur höher als 20°C härtet.

Ausführliche Untersuchungen haben ergeben, dass die erfindungsgemäß gebundenen Proppants auch im Autoklaven bei hohem Druck und hoher Temperatur auch über einen längeren Zeitraum nicht abgebaut werden und auch unter diesen Bedingungen weiterhin eine stabile Bindung erhalten bleibt.

Der Einsatz von hydrolysierbaren Metallverbindungen der Formel (III) bringt überraschenderweise zwei Vorteile mit sich: Bei Konsolidierungsmitteln, die diese Metallverbindungen enthalten, wurde im Vergleich zu solchen ohne diese Metallverbindung eine besonders gute Hydrolysestabilität der gehärteten Konsolidierungsmittel unter Hydrothermalbedingungen festgestellt.

Ein weiterer Vorteil besteht darin, dass Konsolidierungsmittel, die derartige Metalle enthalten, sich auch unter erhöhtem Druck härten lassen, wie weiter unten ausführlicher erläutert.

Proppants wurden bereits vorstehend allgemein erläutert und sind dem Fachmann auf dem Gebiet allgemein bekannt. Es handelt sich um Pellets bzw. Teilchen, die häufig im wesentlichen kugelförmig sind. Sie weisen im allgemeinen etwa einen mittleren Durchmesser von mehreren 100 Mikrometern auf, z.B. im Bereich zwischen 1.000 und 1 µm. Die Proppants können z.B. grobkörniger Sand, keramische Proppants, z.B. aus Al₂O₃, ZrO₂ oder Mullit, Naturprodukte wie Walnussschalen, oder Metall- oder Kunststoffteilchen wie Aluminium- oder Nylon-Pellets sein. Bei den Proppants handelt es sich bevorzugt um Sand oder Keramikteilchen.

Geeignete Beispiele für hydrolytisch abspaltbare Gruppen X der obigen Formeln sind Wasserstoff, Halogen (F, Cl, Br oder I, insbesondere Cl oder Br), Alkoxy (z.B. C₁₋₆-Alkoxy, wie z.B. Methoxy, Ethoxy, n-Propoxy, i-Propoxy und n-, i-, sek.- oder tert.-Butoxy), Aryloxy (vorzugsweise C₆₋₁₀-Aryloxy, wie z.B. Phenoxy), Alkaryloxy, z.B. Benzoyloxy, Acyloxy (z.B. C₁₋₆-Acyloxy, vorzugsweise C₁₋₄-Acyloxy, wie z.B. Acetoxy oder Propionyloxy) und Alkylcarbonyl (z.B. C₂₋₇-Alkylcarbonyl wie Acetyl). Ebenfalls geeignet sind NH₂, mit Alkyl, Aryl und/oder Aralkyl mono- oder disubstituiertes Amino, wobei Beispiele für die Alkyl-, Aryl und/oder Aralkylreste die nachstehend für R angegebenen sind, Amido wie Benzamido oder Aldoxim- oder Ketoximgruppen. Zwei oder drei Gruppen X können auch miteinander verbunden sein, z.B. bei Si-Polyolkomplexen mit Glycol, Glycerin oder Brenzcatechin. Die genannten Gruppen können gegebenenfalls Substituenten, wie Halogen, Hydroxy, Alkoxy, Amino oder Epoxy, enthalten.

Bevorzugte hydrolytisch abspaltbare Reste X sind Halogen, Alkoxygruppen und Acyloxygruppen. Besonders bevorzugte hydrolytisch abspaltbare Reste sind C₂₋₄-Alkoxygruppen, insbesondere Ethoxy.

Die hydrolytisch nicht abspaltbaren Reste R der Formel (I) sind z.B. Alkyl (z.B. C₁₋₂₀-Alkyl, insbesondere C₁₋₄-Alkyl, wie Methyl, Ethyl, n-Propyl, i-Propyl, n-Butyl, i-Butyl, sek.-Butyl und tert.-Butyl), Alkenyl (z.B. C₂₋₂₀-Alkenyl, insbesondere C₂₋₄-Alkenyl, wie Vinyl, 1-Propenyl, 2-Propenyl und Butenyl), Alkinyl (z.B. C₂₋₂₀-Alkinyl, insbesondere C₂₋₄-Alkinyl, wie Ethinyl oder Propargyl), Aryl (insbesondere C₆₋₁₀-Aryl, wie Phenyl und Naphthyl) und entsprechende Aralkyl- und Alkarylgruppen, wie Tolyl und Benzyl, und cyclische C₃-C₁₂-Alkyl- und -Alkenylgruppen, wie Cyclopropyl, Cyclopentyl und Cyclohexyl.

Die Reste R können übliche Substituenten aufweisen, bei denen es sich um funktionelle Gruppen handeln kann, über die nach Bedarf auch eine Vernetzung des Kondensats über organische Gruppen möglich ist. Übliche Substituenten sind z.B. Halogen (z.B. Chlor oder Fluor), Epoxid (z.B. Glycidyl oder Glycidyloxy), Hydroxy, Ether, Ester, Amino, Monoalkylamino, Dialkylamino, gegebenenfalls substituiertes Anilino, Amid, Carboxy, Alkenyl, Alkinyl, Acryl, Acryloxy, Methacryl, Methacryloxy, Mercapto, Cyano, Alkoxy, Isocyanato, Aldehyd, Keto, Alkylcarbonyl, Säureanhydrid und Phosphorsäure. Diese Substituenten sind über zweiwertige Brückengruppen, insbesondere Alkylen-, Alkenylen- oder Arylen-Brückengruppen, die durch Sauerstoff- oder -NH-Gruppen unterbrochen sein können, an das Siliciumatom gebunden. Die Brückengruppen enthalten z. B. 1 bis 18, vorzugsweise 1 bis 8 und insbesondere 1 bis 6 Kohlenstoffatome. Die genannten zweiwertigen Brückengruppen leiten sich z.B. von den oben genannten einwertigen Alkyl-, Alkenyl- oder Arylresten ab. Natürlich kann der Rest R auch mehr als eine funktionelle Gruppe aufweisen.

Bevorzugte Beispiele für hydrolytisch nicht abspaltbare Reste R mit funktionellen Gruppen, über die eine Vernetzung möglich ist, sind ein Glycidyl- oder ein Glycidyloxy-(C₁₋₂₀)-alkylen-Rest, wie β-Glycidyloxyethyl, γ-Glycidyloxypropyl, δ-Glycidyloxybutyl, ε-Glycidyloxypentyl, ω-Glycidyloxyhexyl, und 2-(3,4-Epoxycyclohexyl)ethyl, ein (Meth)acryloxy-(C₁₋₆)-alkylen-Rest, z.B. (Meth)acryloxymethyl, (Meth)acryloxyethyl, (Meth)acryloxypropyl oder (Meth)acryloxybutyl, und ein 3-Isocyanatopropylrest. Besonders bevorzugte Reste sind γ-Glycidyloxypropyl und (Meth)acryloxypropyl. Hierbei steht (Meth)acryl für Acryl und Methacryl.

Bevorzugte Reste R, die eingesetzt werden, sind Reste ohne Substituenten oder funktionelle Gruppen, insbesondere Alkylgruppen, vorzugsweise mit 1 bis 4 Kohlenstoffatomen, insbesondere Methyl und Ethyl, sowie Arylreste wie Phenyl.

Beispiele für Organosilane der allgemeinen Formel (I) sind Verbindungen der folgenden Formeln, wobei die Alkylsilane und insbesondere Methyltriethoxysilan besonders bevorzugt sind:
CH₃-SiCl₃, CH₃-Si(OC₂H₅)₃, C₂H₅-SiCl₃, C₂H₅-Si(OC₂H₅)₃, C₃H₇-Si(OC₂H₅)₃, C₆H₅-Si(OC₂H₅)₃, (C₂H₅O)₃-Si-C₃H₆-Cl, (CH₃)₂SiCl₂, (CH₃)₂Si(OC₂H₅)₂, (CH₃)₂Si(OH)₂, (C₆H₅)₂SiCl₂, (C₆H₅)₂Si(OC₂H₅)₂, (i-C₃H₇)₃SiOH, CH₂=CH-Si(OOCCH₃)₃, CH₂=CH-SiCl₃, CH₂=CH-Si(OC₂H₅)₃, CH₂=CHSi(OC₂H₅)₃. CH₂=CH-Si(OC₂H₄OCH₃)₃, CH₂=CH-CH₂-Si(OC₂H₅)₃, CH₂=CH-CH₂-Si(OC₂H₅)₃, CH₂=CH-CH₂-Si(OOCCH₃)₃, CH₂=C(CH₃)COO-C₃H₇-Si(OC₂H₅)₃, n-C₆H₁₃-CH₂-CH₂-Si(OC₂H₅)₃, n-C₈H₁₇-CH₂-CH₂-Si(OC₂H₅)₃,

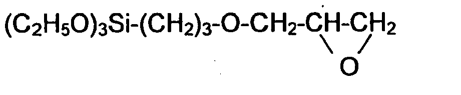

Beispiele für die hydrolysierbaren Silane der allgemeinen Formel (II) sind Si(OCH₃)₄, Si(OC₂H₅)₄, Si(O-n- oder i-C₃H₇)₄, Si(OC₄H₉)₄, SiCl₄, HSiCl₃, Si(OOCCH₃)₄. Von diesen hydrolysierbaren Silanen ist Tetraethoxysilan besonders bevorzugt.

Die Silane lassen sich nach bekannten Methoden herstellen; vgl. W. Noll, "Chemie und Technologie der Silicone", Verlag Chemie GmbH, Weinheim/Bergstraße (1968).

Bei der Metallverbindung der allgemeinen Formel (III)

MXₐ (III)

ist M ein Metall der Hauptgruppen III bis V oder der Nebengruppen II bis VIII des Periodensystems der Elemente einschließlich Bor, X wie in Formel (I) definiert, wobei zwei Gruppen X durch eine Oxogruppe ersetzt sein können, und entspricht a der Wertigkeit des Elements.

M ist von Si verschieden. Hier wird Bor auch zu den Metallen gezählt. Beispiele für derartige Metallverbindungen sind Verbindungen von glas- oder keramikbildenden Elementen, insbesondere Verbindungen mindestens eines Elements M aus den Hauptgruppen III bis V und/oder den Nebengruppen II bis IV des Periodensystems der Elemente. Vorzugsweise handelt es sich dabei um hydrolysierbare Verbindungen von Al, B, Sn, Ti, Zr, V oder Zn, insbesondere solche von Al, Ti oder Zr, oder Mischungen aus zwei oder mehreren dieser Elemente. Ebenfalls einsetzbar sind z.B. hydrolysierbare Verbindungen von Elementen der Nebengruppen V bis VIII des Periodensystems (z.B. Mn, Cr, Fe und Ni). Auch hydrolysierbare Verbindungen der Lanthanoiden wie Ce können verwendet werden. Bevorzugt sind Metallverbindungen der Elemente B, Ti, Zr und Al, wobei Ti besonders bevorzugt ist.

Bevorzugte Metallverbindungen sind z. B. die Alkoxide von B, Al, Zr und insbesondere Ti. Geeignete hydrolysierbare Metallverbindungen sind z. B. Al(OCH₃)₃, Al(OC₂H₅)₃, Al(O-n-C₃H₇)₃, Al(O-i-C₃H₇)₃, Al(O-n-C₄H₉)₃, Al(O-sek.-C₄H₉)₃, AlCl₃, AlCl(OH)₂, Al(OC₂H₄OC₄H₉)₃, TiCl₄, Ti(OC₂H₅)₄, Ti(O-n-C₃H₇)₄, Ti(O-i-C₃H₇)₄, Ti(OC₄H₉)₄, Ti(2-ethylhexoxy)₄, ZrCl₄, Zr(OC₂H₅)₄, Zr(O-n-C₃H₇)₄, Zr(O-i-C₃H₇)₄, Zr(OC₄H₉)₄, ZrOCl₂, Zr(2-ethylhexoxy)₄, sowie Zr-Verbindungen, die komplexierende Reste aufweisen, wie z.B. β-Diketon- und (Meth)acrylreste, Natriumethanolat, Kaliumacetat, Borsäure, BCl₃, B(OCH₃)₃, B(OC₂H₅)₃, SnCl₄, Sn(OCH₃)₄, Sn(OC₂H₅)₄, VOCl₃ und VO(OCH₃)₃.

In einer besonders bevorzugten Ausführungsform wird das Konsolidierungsmittel unter Verwendung eines Alkylsilans wie Methyltriethoxysilan (MTEOS), eines Arylsilans wie Phenyltriethoxysilan, eines Orthokieselsäureesters wie Tetraethoxysilan (TEOS) und einer Metallverbindung der Formel (III) hergestellt, wobei die Verwendung einer Metallverbindung von B, Al, Zr und insbesondere Ti besonders bevorzugt ist.

Zur Herstellung des Konsolidierungsmittels werden vorzugsweise mindestens 50 Mol-%, bevorzugter mindestens 70 Mol-% und insbesondere mindestens 80 Mol-% Organosilane der Formel (I) mit mindestens einer hydrolytisch nicht abspaltbaren Gruppe verwendet. Der Rest sind hydrolysierbare Verbindungen, insbesondere die Metallverbindungen der Formel (III) und die hydrolysierbaren Silane der Formel (II), die keine hydrolytisch nicht abspaltbaren Gruppen aufweisen.

Das molare Verhältnis von eingesetzten Siliciumverbindungen der Formeln (I) und (II) zu eingesetzten Metallverbindungen der Formel (III) liegt im Bereich von 10.000:1 bis 10:1, wobei im Bereich von 2.000:1 bis 20:1 und besonders bevorzugt von 2.000:1 bis 200:1 eine besonders gute Hydrolysestabilität erreicht wird.

Für die Berechnung der molaren Anteile bzw. Verhältnisse, die vorstehend angegeben sind, wird bei den Verbindungen jeweils von den monomeren Verbindungen ausgegangen. Wenn wie nachstehend erläutert bereits vorkondensierte Verbindungen (Dimere usw.) als Ausgangsmaterialien eingesetzt werden, ist auf die entsprechenden Monomere umzurechnen.

Die Hydrolysate oder Vorkondensate des Konsolidierungsmittels werden aus den hydrolysierbaren Silanen und den hydrolysierbaren Metallverbindungen durch Hydrolyse und Kondensation erhalten. Unter Hydrolysaten oder Vorkondensaten werden dabei insbesondere hydrolysierte bzw. zumindest teilweise kondensierte Verbindungen der hydrolysierbaren Ausgangsverbindungen verstanden. Statt der hydrolysierbaren Monomerverbindungen können auch bereits vorkondensierte Verbindungen als Edukte bei der Synthese des Konsolidierungsmittels eingesetzt werden. Derartige, im Reaktionsmedium vorzugsweise lösliche Oligomere können z.B. geradkettige oder cyclische niedermolekulare Teilkondensate (z.B. Polyorganosiloxane) mit einem Kondensationsgrad von z.B. etwa 2 bis 100, insbesondere etwa 2 bis 6, sein.

Die Hydrolysate oder Vorkondensate werden vorzugsweise durch Hydrolyse und Kondensation der hydrolysierbaren Ausgangsverbindungen nach dem Sol-Gel-Verfahren erhalten. Beim Sol-Gel-Verfahren werden die hydrolysierbaren Verbindungen mit Wasser, gegebenenfalls in Gegenwart von sauren oder basischen Katalysatoren, hydrolysiert und zumindest teilweise kondensiert. Vorzugsweise erfolgt die Hydrolyse und Kondensation in Gegenwart saurer Kondensationskatalysatoren (z.B. Salzsäure, Phosphorsäure oder Ameisensäure) bei einem pH-Wert von vorzugs-weise 1 bis 3. Das sich bildende Sol kann durch geeignete Parameter, z.B. Kondensationsgrad, Lösungsmittel oder pH-Wert, auf die für das Konsolidierungsmittel gewünschte Viskosität eingestellt werden.

Weitere Einzelheiten des Sol-Gel-Verfahrens sind z.B. bei C.J. Brinker, G.W. Scherer: "Sol-Gel Science - The Physics and Chemistry of Sol-Gel-Processing", Academic Press, Boston, San Diego, New York, Sydney (1990) beschrieben.

Für die Hydrolyse und Kondensation können stöchiometrische Wassermengen, aber auch geringere oder größere Mengen verwendet werden. Vorzugsweise wird eine unterstöchiometrische Wassermenge, bezogen auf die vorhandenen hydrolysierbaren Gruppen, angewandt. Die zur Hydrolyse und Kondensation der hydrolysierbaren Verbindungen eingesetzte Wassermenge beträgt vorzugsweise 0,1 bis 0,9, und besonders bevorzugt 0,25 bis 0,75 Mol Wasser pro Mol der vorhandenen hydrolysierbaren Gruppen. Oft werden besonders gute Ergebnisse mit weniger als 0,7 Mol Wasser, insbesondere 0,55 bis 0,65 Mol Wasser, pro Mol der vorhandenen hydrolysierbaren Gruppen erzielt.

Das erfindungsgemäß verwendete Konsolidierungsmittel liegt insbesondere partikelfrei als Lösung oder Emulsion vor. Vor der Anwendung kann das Konsolidierungsmittel durch Zusatz einer weiteren Wassermenge aktiviert werden.

Das Konsolidierungsmittel kann herkömmliche Additive enthalten und Lösungsmittel wie Wasser, Alkohole, vorzugsweise niedere aliphatische Alkohole (C₁-C₈-Alkohole), wie Methanol, Ethanol, 1-Propanol, Isopropanol und 1-Butanol, Ketone, vorzugsweise niedere Dialkylketone, wie Aceton und Methylisobutylketon, Ether, vorzugsweise niedere Dialkylether, wie Diethylether, oder Monoether von Diolen, wie Ethylenglycol oder Propylenglycol, mit C₁-C₈-Alkoholen, Amide, wie Dimethylformamid, Tetrahydrofuran, Dioxan, Sulfoxide, Sulfone oder Butylglycol und deren Gemische. Bevorzugt werden Wasser und Alkohole verwendet. Es können auch hochsiedende Lösungsmittel eingesetzt werden, z.B. Polyether wie Triethylenglycol, Diethylenglycoldiethylether und Tetraethylenglycoldimethylether. In manchen Fällen finden auch andere Lösungsmittel Verwendung, z.B. Leichtparaffine (Petrolether, Alkane und Cycloalkane), Aromaten, Heteroaromaten und halogenierte Kohlenwasserstoffe. Anwendung können auch Dicarbonsäureester wie Bernsteinsäuredimethylester, Adipinsäuredimethylester, Glutarsäuredimethylester und deren Mischungen sowie die cyclische Carbonsäureester wie z.B. Propylencarbonat und Glycerincarbonat finden.

Andere herkömmliche Additive sind z. B. Farbstoffe, Pigmente, Viskositätsregulatoren und Tenside. Für die Herstellung von Emulsionen des Konsolidierungsmittels können die bei Siliconemulsionen üblichen stabilisierenden Emulgatoren wie z. B. Tween® 80 und Brij® 30 herangezogen werden.

Zur Herstellung von konsolidierten Proppants wird das Konsolidierungsmittel entweder mit den zu konsolidierenden Proppants vermengt, z.B. durch Mischen oder Einpumpen, oder nachträglich nach dem Positionieren der Proppants im Fracture in den Proppant-tragenden Formationsspalt injiziert und anschließend gehärtet.

Die Konsolidierung (Härtung) erfolgt unter erhöhter Temperatur und erhöhtem Druck, bezogen auf die Normalbedingungen, d.h. der Druck ist größer als 1 bar und die Temperatur ist höher als 20°C. Bevorzugt wird das Konsolidierungsmittel bei einer Temperatur und einem Druck, die etwa den geologischen Rahmenbedingungen des Reservoirs entsprechen, in denen die Proppants eingesetzt werden, gehärtet, in der Regel bei Temperaturen oberhalb 40°C und mindestens 8 bar. In Abhängigkeit von der Formationstiefe können Temperaturen bis 160°C und Drücke bis 500 bar für die Härtung notwendig sein.

Es ist bekannt, dass eine thermische Härtung von Konsolidierungsmitteln unter Umgebungsdruck recht unproblematisch ist. Durch das kontinuierliche Entfernen des Lösungsmittels und des Reaktionsproduktes Wasser aus der Mischung von Bindemittelsol und zu konsolidierendem Material kommt es zu einer fortschreitenden Kondensationsreaktion. Im weiteren thermischen Härtungsprozess wird das Konsolidierungsmittel auf dem zu verfestigenden Material verdichtet.

Die Eigenschaften von konsolidierten Materialien hängen aber auch von den Bedingungen ab, unter denen sie hergestellt werden. In der Regel erhält man ein verbessertes Verhalten der konsolidierten Materialien, wenn sie bei etwa den gleichen Bedingungen hergestellt werden, bei denen sie eingesetzt werden sollen. Für Anwendungen von konsolidierten Materialien bei erhöhten Drücken und Temperaturen ist es daher wünschenswert, auch die Herstellung unter etwa den gleichen Bedingungen durchzuführen. Dies ist aber für die Konsolidierungsmittel nach dem Stand der Technik problematisch, da bei einer Härtung von Konsolidierungsmitteln nach dem Stand der Technik bei erhöhtem Druck und erhöhter Temperatur, d. h. unter Hydrothermalbedingungen, Lösungsmittel und Reaktionsprodukte im System verbleiben und lediglich eine Gleichgewichtseinstellung ermöglichen. Die Gleichgewichtslage unter diesen Bedingungen liefert jedoch keine verfestigten bzw. konsolidierten Materialien.

Es wurde überraschenderweise festgestellt, dass die Gleichgewichtslage durch den Einsatz der Metallverbindungen der Formel (III) verändert wird, so dass ein Abbinden des eingesetzten Konsolidierungsmittels unter Hydrothermalbedingungen (erhöhtem Druck und erhöhter Temperatur) möglich wurde. Auf diese Weise können konsolidierte Proppants unter Hydrothermalbedingungen erhalten werden, wobei die konsolidierten Proppants gute Bindefestigkeiten bei ausreichender Flexibilität aufweisen.

Die Härtung des Konsolidierungsmittels unter Hydrothermalbedingungen kann auch durch Zugabe von Anhydriden zum Konsolidierungsmittel unterstützt werden. Mit Hilfe der Anhydride können Kondensationsprodukte wie Wasser und Ethanol abgefangen werden. Bei den Anhydriden handelt es sich bevorzugt um Anhydride von organischen Säuren oder Mischungen von diesen Anhydriden. Beispiele sind Essigsäureanhydrid, Methylnadinsäureanhydrid, Phthalsäureanhydrid, Bernsteinsäureanhydrid sowie Mischungen davon.

Bei der Zugabe von Anhydriden ist es bevorzugt, z.B. cyclische Kohlensäureester, wie Propylencarbonat, oder Carbonsäureester, wie Glutarsäuredimethylester, Adipinsäuredimethylester und Bernsteinsäuredimethylester, oder Dicarbonsäuredimethylester-Mischungen aus den genannten Estern, als Lösungsmittel zu verwenden. In der Regel kann hierfür das geeignete Lösungsmittel durch das bei der Herstellung des Konsolidierungsmittels verwendete oder gebildete Lösungsmittel vollständig oder teilweise ausgetauscht werden. Neben dem Lösungsmittelaustausch ist es auch möglich, schon bei Herstellung des Konsolidierungsmittels ein bevorzugtes Lösungsmittel einzusetzen.

Die Härtung von zu konsolidierenden Proppants ist somit unter Hydrothermalbedingungen möglich.

Da unter Hydrothermalbedingungen ein Verdichtungsprozeß des gelierten Konsolidierungsmittels teilweise oder ganz verhindert wird, kann das Konsolidierungsmittelgel die Poren großvolumig verschließen. Dies kann bevorzugt durch Durchleiten eines festen oder flüssigen Mediums in den zu konsolidierenden Proppant, der mit dem Konsolidierungsmittel vermengt ist, verhindert bzw. beseitigt werden, wodurch die Porosität in der gewünschten Weise eingestellt werden kann. Die Einleitung erfolgt insbesondere vor oder während des Härtungsvorgangs über einen bestimmten Zeitraum.

Parameter für das Durchpumpen, wie Dauer, Zeitpunkt, Menge oder Durchflussgeschwindigkeit der flüssigen oder gasförmigen Phase, können vom Fachmann ohne weiteres in geeigneter Weise gewählt werden, um die gewünschte Porosität einzustellen. Die Einleitung kann z.B. vor oder nach einer teilweisen Härtung erfolgen, wobei nach und/oder während der Einleitung eine vollständige Aushärtung erfolgt. Zur Einleitung eines flüssigen oder gasförmigen Mediums können z.B. ein inertes Lösungsmittel oder Gas, z. B. N₂, CO₂ oder Luft, eingepumpt werden, wodurch die Porenvolumina freigespült und Reaktionsprodukte abgeführt werden. Als Beispiele für Lösungsmittel für das flüssige Medium kann auf die vorstehend aufgeführten verwiesen werden. Das flüssige oder gasförmige Medium kann gegebenenfalls Katalysatoren und/oder Gas freisetzende Komponenten oder gelöste Stoffe enthalten.

Die Härtung des Konsolidierungsmittels kann gegebenenfalls durch Zufuhr von Kondensationskatalysatoren unterstützt werden, die eine Vernetzung der anorganisch vernetzbaren SiOH-Gruppen oder Metall-OH-Gruppen unter Bildung eines anorganischen Netzwerkes bewirken. Hierfür geeignete Kondensationskatalysatoren sind z. B. Basen oder Säuren, aber auch Fluoridionen oder Alkoxide. Diese können z.B. dem Konsolidierungsmittel kurz vor der Vermischung mit dem Proppant zugegeben werden. In einer bevorzugten Ausführungsform werden die vorstehend beschriebenen gasförmigen oder flüssigen Medien, die durch den Proppant oder die geologische Formation geleitet werden, mit dem Katalysator beladen. Der Katalysator ist dabei bevorzugt flüchtig, gasförmig oder verdampfbar. Der Katalysator kann gelöste Stoffe wie beispielsweise Zirconiumoxychlorid enthalten und in Form eines Gradienten zum Bindemittel zudosiert werden.

Die konsolidierten Proppants sind vorzugsweise porös, wobei der Porositätsgrad der konsolidierten Proppants (Verhältnis von Volumen der Poren zum Gesamtvolumen des Proppants) bevorzugt 5 bis 50% und besonders bevorzugt 20 bis 40% beträgt.

Zur experimentellen Simulation der geologischen Bedingungen wird zur Charakterisierung der Eigenschaften von Konsolidierungsmittel und konsolidierten Proppants bevorzugt eine in der Ölindustrie üblicherweise verwendete sogenannte "Displacement Cell" eingesetzt. In dieser Zelle wird ein zylindrischer Probekörper, der den zu konsolidierenden Proppant enthält, über die Mantelfläche aus Blei mit einem Confinement-Druck, welcher den geologischen Formationsdruck (z.B. 70 bar) simuliert, beaufschlagt und verdichtet. Über die Stirnflächen des Probezylinders erfolgt der Medienein- bzw. austrag gegen einen Gegendruck von beispielsweise 50 bar. Zur thermischen Aushärtung wird die Zelle temperiert. Die resultierende Porosität und Permeabilität erreichen mehr als 80% der ursprünglichen Werte bei Festigkeiten bis 1,6 MPa. Die Festigkeit bleibt auch nach Auslagerung der Formkörper unter Hydrothermalbedingungen in korrosiven Medien erhalten.

Die erfindungsgemäßen Proppants können mit Vorteil bei der Gas-, Erdöl- oder Wasserförderung, insbesondere der Off-shore-Förderung, eingesetzt werden.

Das erfindungsgemäße Konsolidierungsmittel ermöglicht aufgrund seiner chemischen Konstitution eine schnelle und wirksame Verfestigung. In diesem Zusammenhang hat sich der Einsatz von Phenylsilanalkoxiden besonders bewährt. Dies beruht vermutlich darauf, dass diese Verbindungen aufgrund der sterischen Hinderung der Phenylgruppe und der elektronischen Effekte nicht rasch abreagierbare OH-Gruppen aufweisen, die sich besonders gut mit der Oberfläche von anorganischen Materialien verbinden.

Mit dem Konsolidierungsmittel können gebundene poröse Proppants erhalten werden, bei denen die Porosität durch das Einblasen eines Mediums wie Luft, das gegebenenfalls mit flüchtigen Katalysatoren versetzt ist, erzeugt bzw. aufrechterhalten wird. Versucht man nach dem Einbringen des noch nicht ausgehärteten Konsolidierungsmittels dieses durch Einbringen flüssiger Katalysatoren zu härten, erfolgt zwar eine Härtung, aber durch das ausgehärtete Konsolidierungsmittel werden die Poren verstopft.

Das folgende Beispiel erläutert die Erfindung.

### Beispiel

### Herstellung von partikelfreien Konsolidierungsmitteln und deren Verwendung zum Proppant Bridging (hydrothermal)

### a) Konsolidierungsmittel MTTi_{0,1}P₃ 06

26,2 g MTEOS, 7,64 g TEOS und 0,087 g Titantetraisopropoxid wurden gemischt und unter starkem Rühren mit 12,63 g entionisiertem Wasser und 0,088 ml konzentrierter Salzsäure (37%) zur Reaktion gebracht. Nach dem Umschlagspunkt überschritt das Reaktionsgemisch ein Temperaturmaximum von 62°C. Nach Abkühlen der Reaktionsmischung auf 47°C wurde eine weitere Silanmischung, die aus 26,45 g Phenyltriethoxysilan, 6,54 g MTEOS und 7,64 g TEOS besteht, zum Ansatz gegeben und noch 5 Minuten weitergerührt. Nach Stehen über Nacht ist der Binder zur Konsolidierung von Proppants unter Hydrothermalbedingungen geeignet. Der pH-Wert kann je nach Anforderungen im Bereich zwischen pH 0 und 7 eingestellt werden.

Hierzu wurden z.B. 100 g Proppants mit 10 g Toluol vermischt und in eine zylinderförmige Bleihülse gepackt. Die planaren Kopfenden des Zylinders wurden mit einem Drahtsieb belegt. In einer Displacement-Zelle wurde der Probekörper mit Hilfe eines auf den Bleimantel angelegten Drucks von 250 bar (Confinement-Druck) 1 h verdichtet. Anschließend wurde das Bindemittel bei 120°C mit einer Flussrate von 0,5 ml bei einem Confinement-Druck von 70 bar und gegen einen mit einer N₂-Gasflasche angelegten Gegendruck von 20 bar in den Proppant-Körper injiziert. Nach Injektion von zwei Porenvolumina Bindemittel wurde die Porosität durch 30-minütiges Einblasen von N₂ eingestellt und 14 h nachgehärtet. Die erhaltenen Formkörper zeigen Druckfestigkeiten im Bereich von 0,3 bis 0,5 MPa sowie eine Porosität zwischen 36 und 40%.

### b) Konsolidierungsmittel MTTi_{0,1}P₃ 06 / MTTi_{0,1}P₃ 06 (HCl_{1%} ZrOCl_{2 0,1%})

Das unter a) beschriebene Konsolidierungsmittel lieferte in einer zweistufigen Injektion Druckfestigkeiten zwischen 0,7 und 1,4 MPa. Dazu wurde in den Proppantkörper unter den in a) beschriebenen Herstellungs- und Prozessbedingungen ein Porenvolumen des Konsolidierungsmittels MTTi_{0,1}P₃ 06 sowie ein weiteres Porenvolumen MTTi_{0,1}P₃ 06, welches zuvor mit einer Mischung, die aus 1 Gew.% 37%iger Salzsäure und 0,1 Gew.% Zirconoxychlorid (bezogen auf das Bindemittel) besteht, versetzt wurde, injiziert.

### c) Konsolidierungsmittel MTTi_{0,1}P₃ 06 konz.

Das unter a) beschriebene Bindemittel wurde zur Aufkonzentrierung an einem Rotationsverdampfer durch Abdestillieren von Ethanol bis auf einen Feststoffgehalt von 45 % eingeengt. Das resultierende Bindemittel wurde wie in a) beschrieben in einen Proppant-Formkörper injiziert und gehärtet. Es resultieren Druckfestigkeiten von 0,3 MPa.

## Patentansprüche

1. Verfahren zur Herstellung von hydrolytisch und hydrothermal beständigen konsolidierten Proppants, bei dem man
(A) ein Konsolidierungsmittel, umfassend ein Hydrolysat oder Vorkondensat von
(a) mindestens einem Organosilan der allgemeinen Formel (I)
RₙSiX₄₋ₙ (I)
worin die Reste R gleich oder verschieden sind und hydrolytisch nicht abspaltbare Gruppen darstellen, die Reste X gleich oder verschieden sind und hydrolytisch abspaltbare Gruppen oder Hydroxygruppen darstellen und n den Wert 1, 2 oder 3 hat,
(b) mindestens einem hydrolysierbaren Silan der allgemeinen Formel (II)
SiX₄ (II)
worin die Reste X die vorstehende Bedeutung haben; und
(c) mindestens einer Metallverbindung der allgemeinen Formel (III)
MXₐ (III)
worin M ein Metall der Hauptgruppen III bis V oder der Nebengruppen II bis VIII des Periodensystems der Elemente einschließlich Bor ist, X wie in Formel (I) definiert ist, wobei zwei Gruppen X durch eine Oxogruppe ersetzt sein können, und a der Wertigkeit des Elements entspricht;
wobei das molare Verhältnis von eingesetzten Siliciumverbindungen zu eingesetzten Metallverbindungen im Bereich von 10.000:1 bis 10:1 liegt,
mit einem Proppant vermengt und
(B) das Konsolidierungsmittel bei einem Druck größer als 1 bar und einer Temperatur höher als 20°C härtet.

2. Verfahren nach Anspruch 1, **dadurch gekennzeichnet, dass** das Konsolidierungsmittel bei einer Temperatur von mindestens 40°C und einem Druck von mindestens 8 bar gehärtet wird.

3. Verfahren nach Anspruch 1 oder Anspruch 2, **dadurch gekennzeichnet, dass** das Metall der Metallverbindung der allgemeinen Formel (III) aus B, Al, Zr und insbesondere Ti ausgewählt wird.

4. Verfahren nach einem der Ansprüche 1 bis 3, **dadurch gekennzeichnet, dass** vor und/oder während der Härtung für einen bestimmten Zeitraum ein flüssiges oder gasförmiges Medium, insbesondere Luft, durch den zu konsolidierenden Proppant, der mit dem Konsolidierungsmittel vermengt ist, geleitet wird, um die Porosität einzustellen.

5. Verfahren nach Anspruch 4, **dadurch gekennzeichnet, dass** das flüssige oder gasförmige Medium mit flüchtigen, gasförmigen oder verdampfbaren Säuren, Basen oder anderen Katalysatoren beladen wird.

6. Verfahren nach einem der Ansprüche 1 bis 5, **dadurch gekennzeichnet, dass** der Proppant nach dessen Plazierung im Fracture durch nachträgliche Injektion des Konsolidierungsmittels und anschließende Härtung konsolidiert wird.

7. Verfahren nach einem der Ansprüche 1 bis 6, **dadurch gekennzeichnet, dass** das Konsolidierungsmittel ein Hydrolysat oder Vorkondensat von (a1) einem Alkylsilan, (a2) einem Arylsilan, (b) einem Orthokieselsäureester und (c) einem Metallalkoxylat umfasst.

8. Verfahren nach einem der Ansprüche 1 bis 7, **dadurch gekennzeichnet, dass** das Konsolidierungsmittel nach dem Sol-Gel-Verfahren mit einer unterstöchiometrischen Wassermenge, bezogen auf die vorhandenen hydrolysierbaren Gruppen, hergestellt wird.

9. Verfahren nach einem der Ansprüche 1 bis 8, **dadurch gekennzeichnet, dass** das Konsolidierungsmittel vor der Vermengung mit dem Proppant partikelfrei vorliegt.

10. Verfahren nach einem der Ansprüche 1 bis 9, **dadurch gekennzeichnet, dass** der Proppant aus Pellets oder Teilchen aus Sand, Keramik, Walnussschalen, Aluminium oder Nylon besteht.

11. Unter Hydrothermalbedingungen hydrolytisch beständiger konsolidierter Proppant, erhältlich nach einem Verfahren der Ansprüche 1 bis 10.

12. Unter Hydrothermalbedingungen hydrolytisch beständiger konsolidierter Proppant nach Anspruch 11, **dadurch gekennzeichnet, dass** er porös ist.

13. Unter Hydrothermalbedingungen hydrolytisch beständiger konsolidierter Proppant nach Anspruch 11 oder Anspruch 12, **dadurch gekennzeichnet, dass** er einen Porositätsgrad von 5% bis 50% aufweist.

## Claims

1. A process for preparing hydrolytically and hydrothermally stable consolidated proppants, in which
(A) a consolidant comprising a hydrolyzate or precondensate of
(a) at least one organosilane of the general formula (I)
RₙSiX₄₋ₙ (I)
in which the R radicals are the same or different and are hydrolytically nonremovable groups, the X radicals are the same or different and are hydrolytically removable groups or hydroxyl groups, and n has the value of 1, 2 or 3,
(b) at least one hydrolyzable silane of the general formula (II)
SiX₄ (II)
in which the X radicals are each as defined above; and
(c) at least one metal compound of the general formula (III)
MXₐ (III)
in which M is a metal of main groups III to V or of transition groups II to VIII of the Periodic Table of the Elements including boron, X is as defined in formula (I), where two X groups may be replaced by an oxo group, and a corresponds to the valency of the elements;
where the molar ratio of silicon compounds used to metal compounds used is in the range from 10 000:1 to 10:1
is blended with a proppant and
(B) the consolidant is cured at a pressure greater than 1 bar and a temperature higher than 20°C.

2. The process as claimed in claim 1, **characterized in that** the consolidant is cured at a temperature of at least 40°C and a pressure of at least 8 bar.

3. The process as claimed in claim 1 or claim 2, **characterized in that** the metal of the metal compound of the general formula (III) is selected from B, Al, Zr and especially Ti.

4. The process as claimed in any one of claims 1 to 3, **characterized in that,** before and/or during the curing, a liquid or gaseous medium, especially air, is passed through the proppant to be consolidated, which has been mixed with the consolidant, for a particular period in order to establish the porosity.

5. The process as claimed in claim 4, **characterized in that** the liquid or gaseous medium is laden with volatile, gaseous or evaporable acids, bases or other catalysts.

6. The process as claimed in any one of claims 1 to 5, **characterized in that** the proppant, after it has been placed in the fracture, is consolidated by subsequent injection of the consolidant and subsequent curing.

7. The process as claimed in any one of claims 1 to 6, **characterized in that** the consolidant comprises a hydrolyzate or precondensate of (a1) an alkylsilane, (a2) an arylsilane, (b) an orthosilicic acid and (c) a metal alkoxide.

8. The process as claimed in any one of claims 1 to 9, **characterized in that** the consolidant is prepared by the sol-gel process with a substoichiometric amount of water, based on the hydrolyzable groups present.

9. The process as claimed in any one of claims 1 to 8, **characterized in that** the consolidant is present in particle-free form before blending with the proppant.

10. The process as claimed in any one of claims 1 to 12, **characterized in that** the proppant consists of pellets or particles of sand, ceramic, walnut shells, aluminum or nylon.

11. A consolidated proppant which is hydrolytically stable under hydrothermal conditions and is obtainable by a process of claims 1 to 10.

12. A consolidated proppant which is hydrolytically stable under hydrothermal conditions as claimed in claim 11, **characterized in that** it is porous.

13. A consolidated proppant which is hydrolytically stable under hydrothermal conditions as claimed in claim 11 or claim 12, **characterized in that** it has a porosity of from 5% to 50%.

## Revendications

1. Procédé de préparation d'un agent de soutènement consolidé, résistant à l'hydrolyse et à des conditions hydrothermiques, dans lequel procédé :
A) on mélange un agent de consolidation, qui comprend un hydrolysat ou un précondensat
a) d'au moins un organosilane de formule générale (I) :
RₙSiX₄₋ₙ (I)
dans laquelle les entités symbolisées par R sont identiques ou différentes et sont des groupes non séparables par hydrolyse, les entités symbolisées par X sont identiques ou différentes et sont des groupes séparables par hydrolyse ou des groupes hydroxyle, et l'indice n vaut 1, 2 ou 3,
b) d'au moins un silane hydrolysable de formule générale (II) :
SiX₄ (II)
dans laquelle les entités symbolisées par X ont la définition indiquée ci-dessus,
c) et d'au moins un composé de métal, de formule générale (III) :
MXₐ (III)
dans laquelle M représente un atome d'un élément qui est un métal des groupes principaux III à V ou des groupes secondaires II à VIII du Tableau Périodique des Eléments, y compris le bore, le symbole X a la signification indiquée à propos de la formule (I), étant entendu que deux groupes représentés par X peuvent être remplacés par un substituant oxo, et la valeur de l'indice a correspond à la valence dudit élément,
étant entendu que le rapport molaire des composés du silicium utilisés aux composés de métal utilisés vaut de 10000/1 à 10/1,
à un agent de soutènement,
B) et l'on fait durcir cet agent de consolidation, sous une pression supérieure à 1 bar et à une température supérieure à 20 °C.

2. Procédé conforme à la revendication 1, **caractérisé en ce que** l'on fait durcir l'agent de consolidation à une température d'au moins 40 °C et sous une pression d'au moins 8 bars.

3. Procédé conforme à la revendication 1 ou 2, **caractérisé en ce que** l'élément métallique du composé de métal de formule générale (III) est choisi parmi les suivants : bore, aluminium, zirconium et, en particulier, titane.

4. Procédé conforme à l'une des revendications 1 à 3, **caractérisé en ce que,** avant et/ou pendant le durcissement, on fait passer durant un certain temps un milieu liquide ou gazeux, en particulier de l'air, à travers le mélange d'agent de soutènement à consolider et d'agent de consolidation, afin d'y former des pores.

5. Procédé conforme à la revendication 4, **caractérisé en ce que** le milieu liquide ou gazeux est chargé d'acides, de bases ou d'autres catalyseurs volatils, gazeux ou vaporisables.

6. Procédé conforme à l'une des revendications 1 à 5, **caractérisé en ce que** l'on consolide l'agent de soutènement, après l'avoir mis en place dans une fracture, par injection ultérieure de l'agent de consolidation et durcissement subséquent.

7. Procédé conforme à l'une des revendications 1 à 6, **caractérisé en ce que** l'agent de consolidation comprend un hydrolysat ou un précondensat des constituants suivants : (a1) un alkylsilane, (a2) un arylsilane, (b) un ester orthosilicate, et (c) un alcoxylate de métal.

8. Procédé conforme à l'une des revendications 1 à 7, **caractérisé en ce que** l'agent de consolidation a été préparé selon un procédé sol-gel, avec une quantité d'eau hypostoechiométrique par rapport aux groupes hydrolysables présents.

9. Procédé conforme à l'une des revendications 1 à 8, **caractérisé en ce que** l'agent de consolidation, avant d'être mélangé à l'agent de soutènement, ne contient pas de particules.

10. Procédé conforme à l'une des revendications 1 à 9, **caractérisé en ce que** l'agent de soutènement consiste en des pastilles ou des particules de sable, de céramique, de coquilles de noix, d'aluminium ou de nylon.

11. Agent de soutènement consolidé, résistant à une hydrolyse dans des conditions hydrothermiques, accessible par un procédé conforme à l'une des revendications 1 à 10.

12. Agent de soutènement consolidé, résistant à une hydrolyse dans des conditions hydrothermiques, conforme à la revendication 11, **caractérisé en ce qu'**il est poreux.

13. Agent de soutènement consolidé, résistant à une hydrolyse dans des conditions hydrothermiques, conforme à la revendication 11 ou 12, **caractérisé en ce qu'**il présente une porosité de 5 à 50 %.
